# EUROPEAN PATENT SPECIFICATION

(11) **EP 3 239 825 B1**
(45) Date of publication and mention of the grant of the patent: **15.06.2022**
(21) Application number: 15878355.5
(22) Date of filing: 20.01.2015
(51) Int. Cl.: G06F 1/3234, G06F 1/3206, H04M 19/04, G06F 3/0484, H04M 1/725, G06F 1/32

(54) **MULTIMEDIA INFORMATION PRESENTATION METHOD AND TERMINAL**
VERFAHREN ZUR DARSTELLUNG VON MULTIMEDIA-INFORMATIONEN UND ENDGERÄT
PROCÉDÉ DE PRÉSENTATION D'INFORMATIONS MULTIMÉDIA ET TERMINAL

(43) Date of publication of application: 01.11.2017
(73) Proprietor: Huawei Technologies Co., Ltd., Longgang District Shenzhen, Guangdong 518129 (CN)
(72) Inventor: HUANG, Liwei, Shenzhen Guangdong 518129 (CN)
(74) Representative: Epping - Hermann - Fischer
(86) International application number: PCT/CN2015/071092
(87) International publication number: WO 2016/115677

(56) References cited:
- EP-A2- 2 816 554
- CN-A- 102 981 902
- CN-A- 102 984 372
- CN-A- 103 902 044
- CN-A- 104 089 648
- US-A1- 2010 164 479
- US-A1- 2011 109 538

## Description

### TECHNICAL FIELD

The present invention relates to the field of communications technologies, and in particular, to a multimedia information presentation method and a terminal.

### BACKGROUND

With continuous development of communications technologies, mobile terminals become increasingly popular in people's lives. Generally, to reduce power consumption of the mobile terminal, the mobile terminal is off-screen after a short period of time. When a user needs to perform an operation on the mobile terminal, the user lights up a screen to perform the operation.

To satisfy visual experience of the user, the mobile terminal may display various patterns or colors during screen-on. However, when the mobile terminal is in a screen-off state, only the screen-off state of the display screen is presented to the user, which cannot satisfy a requirement of the user for human-computer interaction intelligence.

EP2816554A2 discloses a method of performing a voice command function in an electronic device including detecting voice of a user, acquiring one or more pieces of attribute information from the voice, and authenticating the user by comparing the attribute information with pre-stored authentic attribute information, using a recognition model. An electronic device includes a voice input module configured to detect a voice of a user, a first processor configured to acquire one or more pieces of attribute information from the voice and authenticate the user by comparing the attribute information with a recognition model, and a second processor configured to when the attribute information matches the recognition mode, activate the voice command function, receive a voice command of the user, and execute an application corresponding to the voice command.

US20100164479A1 discloses a method of a portable electronic device for self-calibration of a proximity sensor. A background measurement is obtained by the proximity sensor and a detection threshold of the proximity sensor is adjusted based on the background measurement. The background measurement is a measure of a received signal when no signal is transmitted by the proximity sensor, and the detection threshold is associated with a sensitivity of the proximity sensor to environmental conditions. A source signal is emitted by the proximity sensor based on the adjusted detection threshold of the proximity sensor, and a return signal is received by the proximity sensor corresponding to the source signal. A function of the portable electronic device may be performed based on the received return signal.

US 2011/109538 A1 relates to a method for displaying a dynamic tag, comprising: displaying a tag in full screen on a device display, wherein the tag comprises at least two layers moving relative to one another on the display; retrieving a sensor output characterizing an environment of the device; identifying a relation between the retrieved sensor output and characteristics of the movement of each of the at least two layers; and adjusting the movement of each of the at least two layers in response to identifying.

### SUMMARY

Embodiments of the present invention provide a multimedia information presentation method and a terminal, to resolve technical problems in the prior art that a user operation is relatively complex, and human-computer interaction lacks intelligence.

According to a first aspect, an embodiment of the present invention provides a multimedia information presentation method, including:
obtaining current first environment characteristic information of a terminal in a screen-off state;
determining, according to the first environment characteristic information and a preset first mapping relationship between environment characteristic information and multimedia information, first multimedia information corresponding to the first environment characteristic information; and
presenting the first multimedia information corresponding to the first environment characteristic information to a user.

The first environment characteristic information includes temperature information of an environment in which the terminal is located, and the first mapping relationship includes a mapping relationship between different temperature information and multimedia information.

The presenting the first multimedia information corresponding to the first environment characteristic information to a user specifically includes:
playing, by using a loudspeaker, the first multimedia information corresponding to the first environment characteristic information for the user.

According to a second aspect, an embodiment of the present invention provides a terminal, including: a collection module, configured to obtain current first environment characteristic information of the terminal in a screen-off state;
a processing module, configured to determine, according to the current first environment characteristic information that is of the terminal and is obtained in the screen-off state by the collection module, the first environment characteristic information, and a preset first mapping relationship between environment characteristic information and multimedia information, first multimedia information corresponding to the first environment characteristic information; and
a presentation module, configured to present, to a user, the first multimedia information that is determined by the processing module and is corresponding to the first environment characteristic information.

The first environment characteristic information includes temperature information of an environment in which the terminal is located, and the first mapping relationship includes a mapping relationship between different temperature information and multimedia information.

The presentation module is a loudspeaker circuit, and the processing module is specifically configured to instruct a loudspeaker circuit to play, by using the loudspeaker, the first multimedia information corresponding to the first environment characteristic information for the user. According to the multimedia information presentation method and the terminal provided in the embodiments of the present invention, current first environment characteristic information of a terminal is obtained in a screen-off state, and first multimedia information corresponding to the first environment characteristic information is determined according to the first environment characteristic information and a preset first mapping relationship between environment characteristic information and multimedia information, so as to present the first multimedia information to a user. When presenting the first multimedia information to the user, the terminal keeps in the screen-off state, and does not enter a lock screen state or an unlock state. According to the method provided in the embodiments of the present invention, in a screen-off state of a terminal, different experience is provided for a user according to collected first environment characteristic information, which improves human-computer interaction intelligence.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG 1 is a schematic structural diagram of a terminal according to an example useful for understanding the present invention;
FIG 2 is a schematic flowchart of Embodiment 1 of a multimedia information presentation method according to an embodiment of the present invention;
FIG 3 is a schematic diagram 1 of a multimedia information presentation effect according to an example useful for understanding the present invention;
FIG 4 is a schematic diagram 2 of a multimedia information presentation effect according to an example useful for understanding the present invention;
FIG 5 is a schematic flowchart of Example 2 of a multimedia information presentation method according to an example useful for understanding the present invention;
FIG 6 is a schematic structural diagram of a terminal according to an embodiment of the present invention; and
FIG 7 is a schematic structural diagram of a mobile phone according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

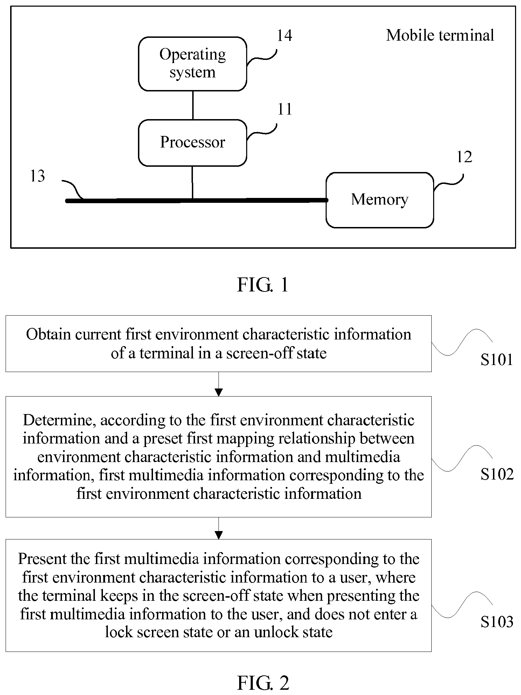

FIG 1 is a schematic structural diagram of a terminal according to an example useful for understanding the present invention. As shown in FIG 1, the terminal in this example may include: a processor 11 such as a CPU, a memory 12, at least one communications bus 13, and an operating system 14 that runs on hardware. The communications bus 13 is configured to implement communication and connection between elements. The memory 12 may include a high-speed RAM, or may include a non-volatile memory NVM such as at least one magnetic disk memory. The memory may store various programs that are used to complete various processing functions and implement method steps in this example.

A person skilled in the art may understand that the terminal shown in FIG 1 may further include various other possible elements such as an antenna and a wireless communications module, which is not limited in the present invention. In addition, the terminal in this example may be various mobile terminals such as a smartphone and a tablet computer, which is not limited in the present invention either. A method in this example may be specifically used to resolve a technical problem in the prior art that human-computer interaction is not intelligent enough.

Specific embodiments are used in the following to describe the technical solutions of the present invention in detail. The following several specific embodiments may be combined with each other, and a same or similar concept or process may not be described repeatedly in some embodiments.

FIG 2 is a schematic flowchart of Embodiment 1 of a multimedia information presentation method according to an embodiment of the present invention. This embodiment of the present invention may be performed by the foregoing mobile terminal, or may be performed by a built-in processor of the foregoing mobile terminal. An initial state of a terminal in this embodiment of the present invention is a screen-off state. The screen-off state means that a mobile phone is in a power-on state, but a screen is black or in a partially lit-up state. That is, the screen-off state is a state before the mobile phone enters a lock screen state. The lock screen state in this embodiment means that a screen is locked, and an unlock screen is provided by displaying preset particular content. A user needs to enter a particular password or perform a particular operation/make a particular gesture in the screen, so that the mobile phone exits from the lock screen state and enters an unlock state. In the unlock state, the user can properly use various functions of the terminal.

It should be noted that, the terminal is still in a standby state when being in the screen-off state. Some circuits, components, or application software inside the terminal is still in a working state, for example, hardware or software applications such as a loudspeaker, a processor, QQ, and WeChat, but a display screen circuit of the terminal is in a sleep state or a partially lit-up state. In the following description, a terminal is used as an example of an execution body.

As shown in FIG 2, the method includes the following steps.

S101. Obtain current first environment characteristic information of the terminal in a screen-off state.

Optionally, in this embodiment of the present invention, the current first environment characteristic information of the terminal may be obtained by using a collection module predisposed in the terminal, or the current first environment characteristic information of the terminal may be obtained by using corresponding sensing APP software. Optionally, the collection module may be a built-in sensor or another component that is of the terminal and that has an information collection function. When the terminal is in the screen-off state, the terminal detects, in real time by using the collection module, the first environment characteristic information of an environment in which the terminal is located. The first environment characteristic information in this embodiment is temperature information of an environment. In other examples useful for understanding the present invention, the first environment characteristic information may be information such as voice information of a user, and light intensity of an environment. Content of the first environment characteristic information is not limited in this embodiment provided that the content can represent a characteristic of the environment in which the terminal is currently located. The corresponding sensing APP software may be, for example, software that obtains current temperature information of the terminal by obtaining a current position of the terminal and querying weather information.

S102. Determine, according to the first environment characteristic information and a preset first mapping relationship between environment characteristic information and multimedia information, first multimedia information corresponding to the first environment characteristic information. Specifically, a first mapping relationship between different environment characteristic information and multimedia information is preset inside the terminal. In this embodiment, different environment characteristic information corresponds to different multimedia information. In other examples useful for understanding the present invention, different environment characteristic information corresponds to same multimedia information. In this embodiment, the multimedia information may be sound information. In other examples useful for understanding the present invention, the multimedia information may be information in a multimedia form such as an animation, or an image. After obtaining the first environment characteristic information of the environment in which the terminal is currently located, the terminal determines, according to the foregoing preset first mapping relationship, the first multimedia information corresponding to the first environment characteristic information.

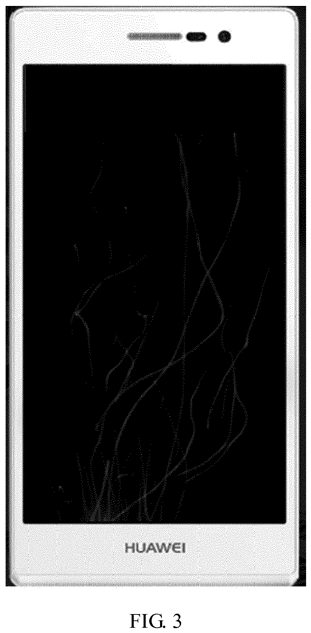

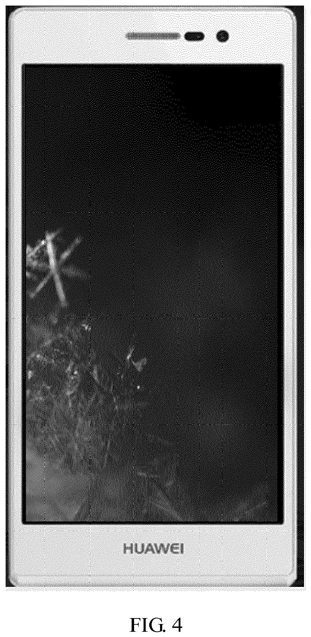

S103. Present the first multimedia information corresponding to the first environment characteristic information to a user, where the terminal keeps in the screen-off state when presenting the first multimedia information to the user, and does not enter a lock screen state or an unlock state. Specifically, the terminal may instruct, by using a built-in processor, the terminal to present the foregoing determined first multimedia information to the user. In addition, when presenting the first multimedia information to the user, the terminal keeps in the screen-off state, and does not enter the lock screen state or the unlock state. In the state, a display screen may be not lit up or may be in a partially lit-up state. Optionally, the terminal may instruct, by using the built-in processor, a multimedia circuit predisposed in the terminal to present the first multimedia information corresponding to the first environment characteristic information to the user. In this embodiment, the multimedia circuit is a loudspeaker circuit inside the terminal. In other examples useful for understanding the present invention, the multimedia circuit may be a display screen circuit, or the like inside the terminal. For specific presentation of the multimedia information, refer to the following example not falling under the scope of protection:
For example, when the terminal is in the screen-off state, and the first environment characteristic information obtained by the terminal is a voice "I feel cold" made by the user, the terminal may determine, according to the preset first mapping relationship, that first multimedia information corresponding to the voice is a "jumping line (flame)" or a "frozen snowflake". In this case, the terminal presents the "jumping line" or the "frozen snowflake" on the display screen to the user. For details, refer to effect diagrams shown in FIG 3 and FIG 4. In the figures, the terminal is in the screen-off state, and does not enter the lock screen state or the unlock state. Alternatively, a piece of warm music may be played during display. The "jumping line" or the "frozen snowflake" disappears after a period of time, and the terminal returns to a black screen state. Therefore, interaction between the user and the terminal becomes simple and has features of relatively high human-centeredness and intelligence, thereby improving human-computer interaction intelligence.

According to the multimedia information presentation method provided in this embodiment of the present invention, current first environment characteristic information of a terminal is obtained in a screen-off state, and first multimedia information corresponding to the first environment characteristic information is determined according to the first environment characteristic information and a preset first mapping relationship between environment characteristic information and multimedia information, so as to present the first multimedia information to a user. When presenting the first multimedia information to the user, the terminal keeps in the screen-off state, and does not enter a lock screen state or an unlock state. According to the method provided in this embodiment of the present invention, in a screen-off state of a terminal, different experience is provided for a user according to collected first environment characteristic information, which improves human-computer interaction intelligence.

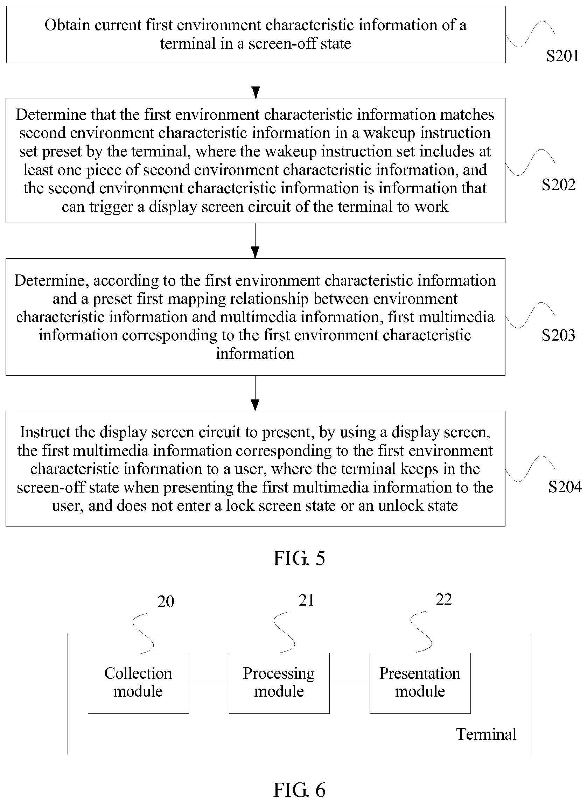

FIG 5 is a schematic flowchart of Example 2 of a multimedia information presentation method according to an example useful for understanding the present invention. This example involves a specific process of presenting, by a terminal by using a predisposed display screen circuit, first multimedia information corresponding to first environment characteristic information to a user. As shown in FIG 5, the method includes the following steps.

S201. Obtain current first environment characteristic information of the terminal in a screen-off state.

For details, reference may be made to the description of the foregoing S101, and details are not described herein again.

S202. Determine that the first environment characteristic information matches second environment characteristic information in a wakeup instruction set preset by the terminal, where the wakeup instruction set includes at least one piece of second environment characteristic information, and the second environment characteristic information is information that can trigger a display screen circuit of the terminal to work.

Specifically, when the terminal is in the screen-off state, the display screen circuit is in a sleep state. Therefore, the terminal presets, inside the terminal, the wakeup instruction set that can determine whether the display screen circuit needs to work. The wakeup instruction set may include at least one piece of second environment characteristic information. The second environment characteristic information is the information that can trigger the display screen circuit of the terminal to work. Optionally, the second environment characteristic information may be a set of some temperature information preset by the terminal, may be a light intensity information set, may be a sound information set, or may be a set including some different types of information. A form of the second environment characteristic information is not limited in this example.

After obtaining the first environment characteristic information of an environment in which the terminal is located, the terminal determines whether the first environment characteristic information matches the second environment characteristic information in the foregoing wakeup instruction set, that is, determines whether the first environment characteristic information is the same as or has a particular correlation with a piece of second environment characteristic information in the wakeup instruction set. When the terminal determines that the first environment characteristic information matches the second environment characteristic information in the foregoing wakeup instruction set, the terminal determines that the display screen circuit needs to work. Optionally, when determining that the first environment characteristic information matches the second environment characteristic information in the foregoing wakeup instruction set, the terminal may send an instruction to the display screen circuit in advance by using a built-in processor, to trigger the display screen circuit to work; or trigger, by increasing in advance a level of a pin that connects a processor and the display screen circuit, the display screen circuit to work. A form of triggering, by the terminal, the display screen circuit to work is not limited in this example.

S203. Determine, according to the first environment characteristic information and a preset first mapping relationship between environment characteristic information and multimedia information, first multimedia information corresponding to the first environment characteristic information. Specifically, for this step, reference may be made to the specific process of the foregoing S102, and details are not described herein again.

S204. Instruct the display screen circuit to present, by using a display screen, the first multimedia information corresponding to the first environment characteristic information to a user, where the terminal keeps in the screen-off state when presenting the first multimedia information to the user, and does not enter a lock screen state or an unlock state.

Optionally, when the display screen circuit presents the first multimedia information to the user by using the display screen, the screen may not be lit up, and the first multimedia information is directly presented to the user; or a part of the screen is lit up, and the first multimedia information is presented to the user. Regardless of a presentation manner, when presenting the first multimedia information, the terminal keeps in the screen-off state, and does not enter the lock screen state or the unlock state.

According to the multimedia information presentation method provided in this example, after current first environment characteristic information of a terminal is obtained in a screen-off state, and it is determined that the first environment characteristic information matches second environment characteristic information in a wakeup instruction set preset by the terminal, first multimedia information corresponding to the first environment characteristic information is determined according to the first environment characteristic information and a preset first mapping relationship between environment characteristic information and multimedia information, so as to instruct a display screen circuit to present, by using a display screen, the first multimedia information to a user. When presenting the first multimedia information to the user, the terminal keeps in the screen-off state, and does not enter a lock screen state or an unlock state. According to the method provided in this example, in a screen-off state of a terminal, different visual effects are provided for a user according to collected first environment characteristic information, which improves human-computer interaction intelligence.

On the basis of the embodiment shown in the foregoing FIG 2, an embodiment involves a specific process of presenting, by the terminal by using a loudspeaker, the first multimedia information to the user. Specifically, the foregoing S103 specifically includes: playing, by using the loudspeaker, the first multimedia information corresponding to the first environment characteristic information for the user. When presenting the first multimedia information to the user, the terminal keeps in the screen-off state, and does not enter the lock screen state or the unlock state.

Specifically, a difference from the foregoing example is: when the terminal is in the screen-off state, a loudspeaker circuit inside the terminal is always in a working state. Therefore, after obtaining the first environment characteristic information in the screen-off state, the terminal may not need to trigger the loudspeaker circuit to work, that is, directly determines the first multimedia information corresponding to the first environment characteristic information. The first multimedia information may be information in an audio format. Then, the terminal transfers the first multimedia information to the loudspeaker circuit, so that the loudspeaker circuit plays the first multimedia information for the user by using the loudspeaker. In an example not falling under the scope of protection, when the terminal is in the screen-off state, and the first environment characteristic information obtained by the terminal is a voice "I feel cold" made by the user, the terminal may determine, according to the preset first mapping relationship, that first multimedia information corresponding to the voice is a piece of lyric and warm music. Then, the terminal plays the piece of music for the user by using the loudspeaker. Therefore, interaction between the user and the terminal becomes simple and has features of relatively high human-centeredness and intelligence, thereby improving human-computer interaction intelligence. It should be noted that, in this embodiment, when presenting the first multimedia information to the user, the terminal keeps in the screen-off state, and does not enter the lock screen state or the unlock state. The screen-off state may be a state in which a screen is black. According to the multimedia information presentation method provided in this embodiment of the present invention, current first environment characteristic information of a terminal is obtained in a screen-off state, and first multimedia information corresponding to the first environment characteristic information is determined according to the first environment characteristic information and a preset first mapping relationship between environment characteristic information and multimedia information, so as to play the first multimedia information for a user by using a loudspeaker. When presenting the first multimedia information to the user, the terminal keeps in the screen-off state, and does not enter a lock screen state or an unlock state. According to the method provided in this embodiment of the present invention, in a screen-off state of a terminal, different experience is provided for a user according to collected first environment characteristic information, which improves human-computer interaction intelligence.

On the basis of all the foregoing embodiments, the terminal may obtain the current first environment characteristic information of the terminal by using a built-in collection module. Optionally, the collection module may be different hardware circuits or components. For details, reference may be made to the following six possible implementation manners.

Manner 1 not falling under the scope of protection: The foregoing collection module may be a loudspeaker or a sound sensor, the first environment characteristic information includes sound information of an environment in which the terminal is located, and the first mapping relationship includes a mapping relationship between different sound information and multimedia information.

It should be noted that, the first environment characteristic information may be a voice of a user, or may be another outside sound detected by the loudspeaker. In the foregoing first mapping relationship, different sound information may be corresponding to different multimedia information, or may be corresponding to same multimedia information. For example, both multimedia information corresponding to the first environment characteristic information that is a voice "I feel cold" made by the user and multimedia information corresponding to "the temperature today is minus 2 degrees Celsius" played by a radio when the terminal is located in an outdoor square are a "jumping line".

Manner 2: The foregoing collection module may be a temperature sensor, the first environment characteristic information includes temperature information of an environment in which the terminal is located, and the first mapping relationship includes a mapping relationship between different temperature information and multimedia information.

It should be noted that, in this embodiment, in the first mapping relationship, different temperature information corresponds to different multimedia information, or may in other examples useful for understanding the present invention, correspond to same multimedia information. In such a case, in the first mapping relationship, all temperatures in a temperature threshold may be corresponding to one piece of multimedia information (certainly, the first mapping relationship includes multiple different temperature thresholds). For example, it is assumed that when the temperature threshold rang from 0 degrees Celsius to minus 5 degrees Celsius, corresponding multimedia information is a "jumping line". Therefore, when the first environment characteristic information collected by the temperature sensor is minus 2 degrees Celsius, and when the first environment characteristic information collected by the temperature sensor is minus 3 degrees Celsius, the two pieces of first environment characteristic information are corresponding to same multimedia information.

Manner 3 not falling under the scope of protection: The foregoing collection module may be a light sensor, the first environment characteristic information includes light intensity of an environment in which the terminal is located, and the first mapping relationship includes a mapping relationship between different light intensity and multimedia information.

It should be noted that, in the first mapping relationship, different light intensity may be corresponding to different multimedia information, or may be corresponding to same multimedia information. In such a case, in the first mapping relationship, all light intensity in a light intensity threshold may be corresponding to one piece of multimedia information.

Manner 4 not falling under the scope of protection: The foregoing collection module may be a gyro sensor, the first environment characteristic information is a rotational angular velocity of the terminal, and the first mapping relationship includes a mapping relationship between different rotational angular velocities and multimedia information.

It should be noted that, in the first mapping relationship, different rotational angular velocities may be corresponding to different multimedia information, or may be corresponding to same multimedia information. In such a case, in the first mapping relationship, all rotational angular velocities in a rotational angular velocity threshold may be corresponding to one piece of multimedia information (certainly, the first mapping relationship includes multiple different rotational angular velocity thresholds). For example, it is assumed that when the rotational angular velocity threshold rang from 20 radians per second to 80 radians per second, corresponding multimedia information is a "rotational image". Therefore, when the first environment characteristic information collected by the gyro sensor is 40 radians per second, and when the first environment characteristic information collected by the gyro sensor is 70 radians per second, the two pieces of the first environment characteristic information are corresponding to same multimedia information.

Manner 5 not falling under the scope of protection: The foregoing collection module may be an acceleration sensor, the first environment characteristic information is a moving speed or a moving acceleration of the terminal, and the first mapping relationship includes a mapping relationship between different speeds and multimedia information or a mapping relationship between different accelerations and multimedia information.

It should be noted that, in the first mapping relationship, different speeds may be corresponding to different multimedia information, or may be corresponding to same multimedia information; or different accelerations may be corresponding to different multimedia information, or may be corresponding to same multimedia information. When different environment characteristic information is corresponding to same multimedia information, in such a case, in the first mapping relationship, all speeds in a speed threshold may be corresponding to one piece of multimedia information, or all accelerations in an acceleration threshold may be corresponding to one piece of multimedia information (certainly, the first mapping relationship includes multiple different speed thresholds or multiple different acceleration thresholds). For example, it is assumed that when the speed threshold rang from 1 m/s to 5 m/s, corresponding multimedia information is a "running comic figure". Therefore, when the first environment characteristic information collected by a speed sensor is 1 m/s, and when the first environment characteristic information collected by the speed sensor is 4 m/s, the two pieces of the first environment characteristic information are corresponding to same multimedia information.

Manner 6 not falling under the scope of protection: The foregoing collection module may be a distance sensor, the first environment characteristic information includes a distance from the terminal to the user, and the first mapping relationship includes a mapping relationship between different distances from the terminal to the user and multimedia information.

It should be noted that, in the first mapping relationship, different distances from the terminal to the user may be corresponding to different multimedia information, or may be corresponding to same multimedia information. In such a case, in the first mapping relationship, all distances in a distance threshold may be corresponding to one piece of multimedia information (certainly, the first mapping relationship includes multiple different distance thresholds). For example, it is assumed that when the distance threshold range from 2 m to 5 m, corresponding multimedia information is a "breathing bubble". Therefore, when the first environment characteristic information collected by the distance sensor is 4 m, and when the first environment characteristic information collected by the temperature sensor is 3 m, the two pieces of the first environment characteristic information are corresponding to same multimedia information.

In this example, before the foregoing S102, the method further includes: determining that a first distance from the terminal to the user is less than a preset threshold. That is, only when the terminal determines that the first distance from the terminal to the user is less than the preset threshold, can the terminal determine, according to the first environment characteristic information and the preset first mapping relationship between environment characteristic information and multimedia information, the first media information corresponding to the first environment characteristic information.

Specifically, when the collection module is the distance sensor, the distance sensor may use a "time of flight" (flying time) principle to measure the distance from the terminal to the user. The "time of flight method" (flying time) means that the terminal transmits an extremely short light pulse, measures a time from transmission of the light pulse to reflection of the light pulse by an object, and calculates the distance from the terminal to the object by measuring a time interval. In this example, that the terminal measures the distance from the user and the terminal is specifically: the terminal may detect, by using an internal Global Positioning System (Global Positioning System, hereinafter referred to as GPS for short) or a gyro sensor, whether the terminal is in a static state, and whether the static state lasts for a preset time. If yes, the terminal triggers the distance sensor to send the light pulse to measure the first distance from the terminal to the user.

After collecting the first distance, the terminal determines whether the first distance is less than the preset threshold. If yes, the terminal determines the first multimedia information according to the first environment characteristic information and the first mapping relationship, so as to instruct a corresponding multimedia circuit to present the foregoing determined first multimedia information corresponding to the first distance to the user. In this example, the multimedia circuit may be a display screen working circuit, may be a loudspeaker circuit, or may be a combination thereof. Therefore, when the multimedia circuit presents the first multimedia information to the user, the terminal keeps in the screen-off state, and does not enter the lock screen state or the unlock state. According to the multimedia information presentation method provided in this embodiment of the present invention, current first environment characteristic information of a terminal is obtained in a screen-off state, and first multimedia information corresponding to the first environment characteristic information is determined according to the first environment characteristic information and a preset first mapping relationship between environment characteristic information and multimedia information, so as to instruct a multimedia circuit of the terminal to present the first multimedia information to a user. When presenting the first multimedia information to the user, the terminal keeps in the screen-off state, and does not enter a lock screen state or an unlock state. According to the method provide in this embodiment of the present invention, in a screen-off state of a terminal, different experience is provided for a user according to collected first environment characteristic information, which improves human-computer interaction intelligence.

A person of ordinary skill in the art may understand that all or a part of the steps of the foregoing method embodiments may be implemented by using a program instructing relevant hardware. The foregoing program may be stored in a computer readable memory medium. When the program is executed, the steps of the foregoing method embodiments are performed. The foregoing memory medium includes any medium that can store program code, such as a ROM, a RAM, a magnetic disk, or an optical disc.

FIG 6 is a schematic structural diagram of a terminal according to the present invention. As shown in FIG 6, the terminal includes a collection module 20, a processing module 21, and a presentation module 22.

The collection module 20 is configured to obtain current first environment characteristic information of the terminal in a screen-off state.

The processing module 21 is configured to determine, according to the current first environment characteristic information that is of the terminal and is obtained in the screen-off state by the collection module, the first environment characteristic information, and a preset first mapping relationship between environment characteristic information and multimedia information, first multimedia information corresponding to the first environment characteristic information.

The presentation module 22 is configured to present, to a user, the first multimedia information that is determined by the processing module and is corresponding to the first environment characteristic information.

In this embodiment, the collection module 20 may be a corresponding sensor such as a temperature sensor or a corresponding sensing APP. In other examples useful for understanding the present invention, the collection module 20 may be a sound sensor, a speed sensor, or a gravity sensing sensor, or may be a corresponding sensing APP.

In this embodiment, the foregoing presentation module 22 may be a multimedia circuit that can provide rich effects such as a sound. In other examples useful for understanding the present invention, the foregoing presentation module 22 may be a multimedia circuit that can provide rich effects such as text, a video, and an image.

The terminal provided in this embodiment of the present invention may perform the foregoing method embodiments or examples. Implementation principles and technical effects of the terminal and the method embodiments are similar, and details are not described herein.

Optionally, in an example not falling under the scope of protection, the foregoing presentation module 22 is a display screen circuit. The processing module 21 is further configured to: before determining, according to the first environment characteristic information and the preset first mapping relationship between environment characteristic information and multimedia information, the first media information corresponding to the first environment characteristic information, determine that the first environment characteristic information matches second environment characteristic information in a wakeup instruction set preset by the terminal. The wakeup instruction set includes at least one piece of second environment characteristic information, and the second environment characteristic information is information that can trigger the display screen circuit of the terminal to work.

The processing module 21 is specifically configured to: after determining, according to the first environment characteristic information and the preset first mapping relationship between environment characteristic information and multimedia information, the first multimedia information corresponding to the first environment characteristic information, instruct the display screen circuit to present, by using a display screen, the first multimedia information corresponding to the first environment characteristic information to the user.

In this embodiment, the foregoing presentation module 22 is a loudspeaker circuit. The processing module 21 is specifically configured to instruct a loudspeaker circuit to play, by using the loudspeaker, the first multimedia information corresponding to the first environment characteristic information to the user.

On the basis of the embodiment shown in the foregoing FIG 6, optionally, in an example not falling under the scope of protection, the foregoing collection module 20 may be a loudspeaker or a sound sensor, the first environment characteristic information includes sound information of an environment in which the terminal is located, and the first mapping relationship includes a mapping relationship between different sound information and multimedia information.

In this embodiment, the foregoing collection module 20 may be a temperature sensor, the first environment characteristic information includes temperature information of an environment in which the terminal is located, and the first mapping relationship includes a mapping relationship between different temperature information and multimedia information.

Optionally, in an example not falling under the scope of protection, the foregoing collection module 20 may be a light sensor, the first environment characteristic information includes light intensity of an environment in which the terminal is located, and the first mapping relationship includes a mapping relationship between different light intensity and multimedia information.

Optionally, in an example not falling under the scope of protection, the foregoing collection module 20 may be a gyro sensor, the first environment characteristic information is a rotational angular velocity of the terminal, and the first mapping relationship includes a mapping relationship between different rotational angular velocities and multimedia information.

Optionally, in an example not falling under the scope of protection, the foregoing collection module 20 may be an acceleration sensor, the first environment characteristic information is a moving speed or a moving acceleration of the terminal, and the first mapping relationship includes a mapping relationship between different speeds and multimedia information or a mapping relationship between different accelerations and multimedia information.

Optionally, in an example not falling under the scope of protection, the foregoing collection module 20 may be a distance sensor, the first environment characteristic information includes a distance from the terminal to the user, and the first mapping relationship includes a mapping relationship between different distances from the terminal to the user and multimedia information. The processing module 21 is further configured to: before determining, according to the first environment characteristic information and the preset first mapping relationship between environment characteristic information and multimedia information, the first media information corresponding to the first environment characteristic information, determine that a first distance from the terminal to the user is less than a preset threshold. In this scenario, the presentation module 22 may be a display screen circuit, or may be a loudspeaker circuit. The foregoing processing module 21 is further configured to instruct the display screen circuit and/or the loudspeaker circuit to present the first multimedia information to the user.

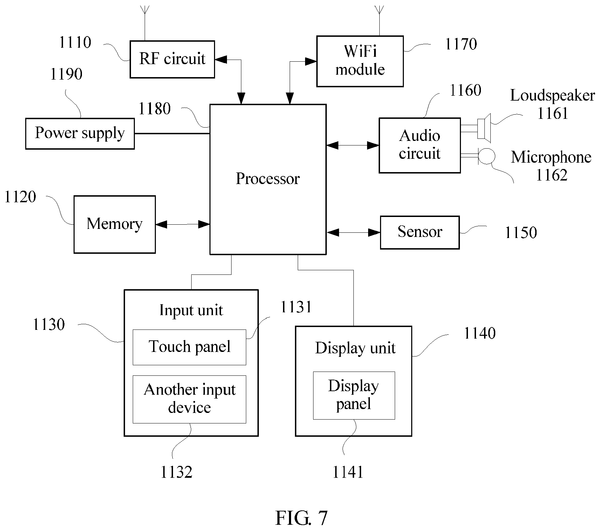

As described in the foregoing embodiments, the mobile terminal involved in this embodiment of the present invention may be a mobile phone, a tablet computer, a PDA, or the like. The mobile phone is used as an example. FIG 7 shows a block diagram of a partial structure when the mobile terminal is a mobile phone according to an embodiment of the present invention. Referring to FIG 7, the mobile phone includes parts such as a radio frequency (Radio Frequency, RF) circuit 1110, a memory 1120, an input unit 1130, a display unit 1140, a sensor 1150, an audio circuit 1160, a Wireless Fidelity (Wireless Fidelity, WiFi) module 1170, a processor 1180, and a power supply 1190. A person skilled in the art may understand that the mobile phone structure shown in FIG 7 constitutes no limitation on the mobile phone, and may include more or fewer parts than those shown in the figure, or combine some parts, or have a different part arrangement.

The following describes all the composition parts of the mobile phone in detail with reference to FIG 7.

The RF circuit 1110 may be configured to: receive and send a signal in an information receiving or sending process or a call process; particularly, after receiving downlink information of a base station, send the downlink information to the processor 1180 for processing; and send uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 1110 may further communicate with a network and another device by means of wireless communications. The foregoing wireless communications may use any communications standard or protocol, which includes but is not limited to a global system for mobile communications (Global System for Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (short messaging service, SMS), and the like.

The memory 1120 may be configured to store a software program and a module. The processor 1180 performs various function applications of the mobile phone and data processing by running the software program and the module that are stored in the memory 1120. The memory 1120 may mainly include a program storage area and a data storage area. The program storage area may store an operating system, an application program required by at least one function (such as a sound playing function or an image playing function), and the like. The data storage area may store data (such as audio data or a phone book) created according to use of the mobile phone, and the like. In addition, the memory 1120 may include a high-speed random access memory, or may include a nonvolatile memory such as at least one magnetic disk storage component, a flash device, or another volatile solid-state storage device.

The input unit 1130 may be configured to receive digit or character information that is input, and generate key signal input related to user setting and function control of the mobile phone 1100. Specifically, the input unit 1130 may include a touch panel 1131 and another input device 1132. The touch panel 1131, which is also referred to as a touchscreen, may collect a touch operation (such as an operation performed on the touch panel 1131 or near the touch panel 1131 by a user by using a finger or any proper object or accessory such as a stylus) performed on or near the touch panel 1131 by the user, and drive a corresponding connection apparatus according to a preset program.

Optionally, the touch panel 1131 may include two parts: a touch detection apparatus and a touch controller. The touch detection apparatus detects a touch direction of the user, detects a signal brought by the touch operation, and transfers the signal to the touch controller. The touch controller receives touch information from the touch detection apparatus, converts the touch information into touch point coordinates, and then transfers the touch point coordinates to the processor 1180, and can receive and execute a command sent by the processor 1180. In addition, the touch panel 1131 may be implemented in multiple types, such as a resistive type, a capacitive type, an infrared ray, and a surface acoustic wave. In addition to the touch panel 1131, the input unit 1130 may further include the another input device 1132. Specifically, the another input device 1132 may include but is not limited to one or more of a physical keyboard, a function key (such as a volume control key or an on/off key), a trackball, a mouse, a joystick, or the like.

The display unit 1140 may be configured to display information entered by the user or information provided for the user, and various menus of the mobile phone. The display unit 1140 may include a display panel 1141. Optionally, the display panel 1141 may be configured in a form such as a liquid crystal display (Liquid Crystal Display, LCD) and an organic light-emitting diode (Organic Light-Emitting Diode, OLED). Further, the touch panel 1131 may cover the display panel 1141. After detecting a touch operation on or near the touch panel 1131, the touch panel 1131 transfers the touch operation to the processor 1180 to determine a type of a touch event. Subsequently, the processor 1180 provides corresponding visual output on the display panel 1141 according to the type of the touch event. In FIG 7, although the touch panel 1131 and the display panel 1141 are used as two independent parts to implement input and output functions of the mobile phone, in some embodiments, the touch panel 1131 and the display panel 1141 may be integrated to implement the input and output functions of the mobile phone.

The mobile phone may further include at least one sensor 1150 such as a light sensor, a motion sensor, or another sensor. Specifically, the light sensor may include an ambient light sensor and a proximity sensor. The ambient light sensor may adjust luminance of the display panel 1141 according to brightness of ambient light. When the mobile phone is moved to an ear, the ambient light sensor may turn off the display panel 1141 and/or backlight. As a type of the motion sensor, an acceleration sensor can detect an acceleration value in each direction (generally, three axes), and detect a value and a direction of gravity when the acceleration sensor is static, and can be used in an application for recognizing a mobile phone posture (such as screen switching between landscape and portrait modes, a related game, or magnetometer posture calibration), a function related to vibration recognition (such as a pedometer or a knock), and the like. For other sensors such as a gyroscope, a barometer, a hygrometer, a thermometer, and an infrared sensor that may also be disposed on the mobile phone, details are not described herein.

The audio circuit 1160, a loudspeaker 1161, and a microphone 1162 may provide an audio screen between the user and the mobile phone. The audio circuit 1160 may transmit, to the loudspeaker 1161, a received electrical signal converted from audio data, and the loudspeaker 1161 converts the electrical signal into a sound signal for output. On the other hand, the microphone 1162 converts a collected sound signal into an electrical signal. The audio circuit 1160 receives and converts the electrical signal into audio data, and then outputs the audio data to the processor 1180 for processing. The processor 1180 sends processed audio data to, for example, another mobile phone by using the RF circuit 1110, or outputs the processed audio data to the memory 1120 for further processing. WiFi belongs to a short-distance wireless transmission technology. The mobile phone may help, by using the WiFi module 1170, the user to receive and send an email, browse a web page, access a streaming media, and the like. The WiFi module 1170 provides wireless broadband Internet access for the user. Although the WiFi module 1170 is shown in FIG 7, it may be understood that the WiFi module 1170 is not a mandatory composition of the mobile phone, and may be totally omitted according to a requirement without changing the essential scope of the present invention.

The processor 1180 is a control center of the mobile phone and is connected to all the parts of the entire mobile phone by using various screens and lines, and perform various functions of the mobile phone and data processing by running or executing the software program and/or the module that are/is stored in the memory 1120 and by invoking data stored in the memory 1120, so as to perform overall monitoring on the mobile phone. Optionally, the processor 1180 may include one or more processing units. Preferably, an application processor and a modem processor may be integrated into the processor 1180. The application processor mainly processes an operating system, a user screen, an application program, and the like. The modem processor mainly processes radio communications. It may be understood that the foregoing modem processor may be not integrated into the processor 1180.

The mobile phone further includes the power supply 1190 (such as a battery) that supplies power to all the parts. Preferably, the power supply may be logically connected to the processor 1180 by using a power management system, so as to implement functions such as charging and discharging management and power consumption management by using the power supply management system.

Although not shown, the mobile phone may further include a camera, a Bluetooth module, a GPS module, and the like, and details are not described herein.

In this embodiment of the present invention, the processor 1180 included in the mobile phone further has the following functions: obtaining current first environment characteristic information of the mobile phone; determining, according to the first environment characteristic information and a preset first mapping relationship between environment characteristic information and multimedia information, first multimedia information corresponding to the first environment characteristic information; and presenting the first multimedia information corresponding to the first environment characteristic information to the user.

When the mobile terminal in the present invention is the foregoing mobile phone, for how the mobile phone presents multimedia information in a screen-off state, reference may be made to detailed descriptions in the foregoing multimedia information presentation method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the 2. claims.

## Claims

1. A multimedia information presentation method, comprising:
obtaining (S101) current first environment characteristic information of a terminal in a screen-off state;
determining (S102), according to the first environment characteristic information and a preset first mapping relationship between environment characteristic information and multimedia information, first multimedia information corresponding to the first environment characteristic information; and
presenting (S103) the first multimedia information corresponding to the first environment characteristic information to a user, where the terminal keeps in the screen-off state when presenting the first multimedia information to the user, and does not enter a lock screen state or an unlock state, wherein the first environment characteristic information comprises temperature information of an environment in which the terminal is located, and the first mapping relationship comprises a mapping relationship between different temperature information and multimedia information, **characterized in that** the presenting (S103) the first multimedia information corresponding to the first environment characteristic information to a user specifically comprises:
playing, by using a loudspeaker, the first multimedia information corresponding to the first environment characteristic information for the user.

2. A terminal, comprising:
a collection module (20), configured to obtain current first environment characteristic information of the terminal in a screen-off state;
a processing module (21), configured to determine, according to the current first environment characteristic information that is of the terminal and is obtained in the screen-off state by the collection module, the first environment characteristic information, and a preset first mapping relationship between environment characteristic information and multimedia information, first multimedia information corresponding to the first environment characteristic information; and
a presentation module (22), configured to present, to a user, the first multimedia information that is determined by the processing module and is corresponding to the first environment characteristic information, where the terminal keeps in the screen-off state when presenting the first multimedia information to the user, and does not enter a lock screen state or an unlock state,
wherein the first environment characteristic information comprises temperature information of an environment in which the terminal is located, and the first mapping relationship comprises a mapping relationship between different temperature information and multimedia information, **characterized in that** the presentation module (22) is a loudspeaker circuit, and the processing module (21) is specifically configured to instruct the loudspeaker circuit to play, by using a loudspeaker (1161), the first multimedia information corresponding to the first environment characteristic information for the user.

## Patentansprüche

1. Verfahren zur Darstellung von Multimedia-Informationen, umfassend:
Erhalten (S101) von aktuellen ersten Umgebungsmerkmalsinformationen eines Endgeräts in einem Bildschirm-aus-Zustand;
Bestimmen (S102) von ersten Multimedia-Informationen, die den ersten Umgebungsmerkmalsinformationen entsprechen, gemäß den ersten Umgebungsmerkmalsinformationen und einer voreingestellten ersten Zuordnungsbeziehung zwischen Umgebungsmerkmalsinformationen und Multimedia-Informationen; und
Darstellen (S103) der ersten Multimedia-Informationen, die den ersten Umgebungsmerkmalsinformationen entsprechen, für einen Benutzer, wobei das Endgerät beim Darstellen der ersten Multimedia-Informationen für den Benutzer den Bildschirm-aus-Zustand beibehält und weder in einen Bildschirmsperrzustand noch einen Entsperrzustand eintritt, wobei die ersten Umgebungsmerkmalsinformationen Temperaturinformationen einer Umgebung umfassen, in der das Endgerät sich befindet,
und die erste Zuordnungsbeziehung eine Zuordnungsbeziehung zwischen verschiedenen Temperaturinformationen und Multimedia-Informationen umfasst, **dadurch gekennzeichnet, dass** das Darstellen (S103) der ersten Multimedia-Informationen, die den ersten Umgebungsmerkmalsinformationen entsprechen, für den Benutzer insbesondere umfasst:
Wiedergeben der ersten Multimedia-Informationen, die den ersten Umgebungsmerkmalsinformationen entsprechen, für den Benutzer durch Verwenden eines Lautsprechers.

2. Endgerät, umfassend:
ein Erfassungsmodul (20), das zum Erhalten von aktuellen ersten Umgebungsmerkmalsinformationen des Endgeräts in einem Bildschirm-aus-Zustand konfiguriert ist;
ein Verarbeitungsmodul (21), das zum Bestimmen von ersten Multimedia-Informationen, die den ersten Umgebungsmerkmalsinformationen entsprechen, gemäß den aktuellen ersten Umgebungsmerkmalsinformationen, die vom Endgerät sind und durch das Erfassungsmodul im Bildschirm-aus-Zustand erhalten werden, den ersten Umgebungsmerkmalsinformationen und einer voreingestellten ersten Zuordnungsbeziehung zwischen Umgebungsmerkmalsinformationen und Multimedia-Informationen konfiguriert ist; und
ein Darstellungsmodul (22), das zum Darstellen der ersten Multimedia-Informationen, die durch das Verarbeitungsmodul bestimmt werden und den ersten Umgebungsmerkmalsinformationen entsprechen, für einen Benutzer konfiguriert ist, wobei das Endgerät beim Darstellen der ersten Multimedia-Informationen für den Benutzer den Bildschirm-aus-Zustand beibehält und weder in einen Bildschirmsperrzustand noch einen Entsperrzustand eintritt,
wobei die ersten Umgebungsmerkmalsinformationen Temperaturinformationen einer Umgebung umfassen, in der das Endgerät sich befindet, und die erste Zuordnungsbeziehung eine Zuordnungsbeziehung zwischen verschiedenen Temperaturinformationen und Multimedia-Informationen umfasst, **dadurch gekennzeichnet, dass** das Darstellungsmodul (22) eine Lautsprecherschaltung ist, und das Verarbeitungsmodul (21) insbesondere so konfiguriert ist, dass es die Lautsprecherschaltung zum Wiedergeben der ersten Multimedia-Informationen, die den ersten Umgebungsmerkmalsinformationen entsprechen, für den Benutzer durch Verwenden eines Lautsprechers (1161) anweist.

## Revendications

1. Procédé de présentation d'informations multimédias, comprenant :
obtenir (S101) des premières informations de caractéristiques d'environnement actuelles d'un terminal dans un état d'écran éteint ;
déterminer (S 102), selon les premières informations de caractéristiques d'environnement et une première relation de mappage prédéfinie entre des informations de caractéristiques d'environnement et des informations multimédias, des premières informations multimédias correspondant aux premières informations de caractéristiques d'environnement ; et
présenter (S103) les premières informations multimédias correspondant aux premières informations de caractéristiques d'environnement à un utilisateur, où le terminal reste dans l'état d'écran éteint lors de la présentation des premières informations multimédias à l'utilisateur, et n'entre pas dans un état d'écran verrouillé ou un état déverrouillé, dans lequel les premières informations de caractéristiques d'environnement comprennent des informations de température d'un environnement dans lequel le terminal est situé, et la première relation de mappage comprend une relation de mappage entre différentes informations de température et informations multimédias, **caractérisé en ce que** la présentation (S103) des premières informations multimédias correspondant aux premières informations de caractéristiques d'environnement à un utilisateur comprend spécifiquement :
lire, en utilisant un haut-parleur, les premières informations multimédias correspondant aux premières informations de caractéristiques d'environnement pour l'utilisateur.

2. Terminal, comprenant :
un module de collecte (20), configuré pour obtenir des premières informations de caractéristiques d'environnement actuelles du terminal dans un état d'écran éteint ;
un module de traitement (21), configuré pour déterminer, selon les premières informations de caractéristiques d'environnement actuelles qui sont du terminal et qui sont obtenues dans l'état d'écran éteint par le module de collecte, les premières informations de caractéristiques d'environnement, et une première relation de mappage prédéfinie entre des informations de caractéristiques d'environnement et des informations multimédias, des premières informations multimédias correspondant aux premières informations de caractéristiques d'environnement ; et
un module de présentation (22), configuré pour présenter, à un utilisateur, les premières informations multimédias qui sont déterminées par le module de traitement et qui correspondent aux premières informations de caractéristiques d'environnement, où le terminal reste dans l'état d'écran éteint lors de la présentation des premières informations multimédias à l'utilisateur, et n'entre pas dans un état d'écran verrouillé ou un état déverrouillé,
dans lequel les premières informations de caractéristiques d'environnement comprennent des informations de température d'un environnement dans lequel le terminal est situé, et la première relation de mappage comprend une relation de mappage entre différentes informations de température et informations multimédias, **caractérisé en ce que** le module de présentation (22) est un circuit de haut-parleur, et le module de traitement (21) est spécifiquement configuré pour donner l'instruction au circuit de haut-parleur de lire, en utilisant un haut-parleur (1161), les premières informations multimédias correspondant aux premières informations de caractéristiques d'environnement pour l'utilisateur.
